# EUROPEAN PATENT SPECIFICATION

(11) **EP 0 454 830 B1**
(45) Date of publication and mention of the grant of the patent: **07.02.1996**
(21) Application number: 91900090.1
(22) Date of filing: 01.11.1990
(51) Int. Cl.: C08L 23/12, C08L 23/02, C08L 71/03

(54) **POLYMER BLEND COMPOSITIONS**
POLYMERMISCHUNGEN
COMPOSITIONS DE MELANGE POLYMERE

(30) Priority: 17.11.1989 US 437711
(43) Date of publication of application: 06.11.1991
(73) Proprietor: GENERAL ELECTRIC COMPANY, Schenectady, NY 12345 (US)
(72) Inventor: GAGGAR, Satish, Kumar, Parkersburg, WV 26101 (US)
(74) Representative: Pratt, Richard Wilson
(86) International application number: US9006246
(87) International publication number: WO9107462

(56) References cited:
- EP-A- 0 247 355
- EP-A- 0 282 985
- EP-A- 0 287 092
- DE-B- 1 297 341
- JP-B- 0 484 612
- US-A- 3 425 981
- US-A- 4 624 989
- US-A- 4 719 263
- US-A- 4 822 838
- Database WPIL Section Ch, week 8928, Derwent Publications Ltd, London, GB; Class A89, AN 89-203355 & JP A 1 142 569

## Description

### BACKGROUND OF THE INVENTION:

FIELD: Polymers having electrostatic dissipative properties.

PRIOR ART: This invention is an improvement on the inventions described and claimed in U.S. Patents 4,588,773 (Federl et al I), 4,775,716 (Federl et al II) and 4,857,590 (Gaggar et al), all of which are assigned to the predecessor of the present application's assignee.

Federl et al I relates to the use of an ABS graft copolymer containing a copolymer of epichlorohydrin and an oxirane composition, ethylene oxide. Federl et al II, a continuation-in-part of Federl et al I, also concerns an antistatic graft ABS, but contains smaller amounts of an epichlorohydrin/oxirane copolymer having a somewhat higher ratio of ethylene oxide to epichlorohydrin in said copolymer. US Patent 4,857,590 (Gaggar et al) is directed to the use of an alkyl methacrylate polymer to compatibilize the antistatic composition with the ABS polymer.

Barnhouse et al; US Patent No.4,719,263, discloses that the antistatic properties of various polymers, including polyvinyl chloride (PVC), may be improved by adding a copolymer of epichlorohydrin and ethylene oxide. This reference, however, makes no mention of the use of such antistatic agents for polyolefins, such as polypropylene.

### SUMMARY OF THE INVENTION

The present invention is directed to the use of an epihalohydrin/ethylene oxide copolymer to impart antistatic properties to polyolefins, such as polypropylene.

The polymeric blends of the present invention are defined in the claims.

The need for thermoplastic molding compositions which rapidly dissipate a static charge has grown substantially in recent years. It is reliably estimated that static electricity costs industry millions of dollars in expensive repair and replacement of sensitive electronic components alone. Major applications for such material include tote boxes for the storage of computer chips and other electronic components, xerographic copier parts and communications equipment. Static electricity is also a major hazard where explosive materials are present.

Static electricity is very expensive to control in polymeric materials. Until the invention of Federl I, thermoplastics were generally rendered at least partially antistatic by the incorporation of conductive materials into the resin, such as carbon black particles, or carbon (or metallic) fibers. The literature is replete with attempts to render polymers antistatic all of which have met with less than sucessful results.

Polyolefins, primarily polyethylene and polypropylene, constitute one of the largest classes of thermoplastics manufactured. Major uses include fibers and film, and injection and blow molded parts for a wide variety of products, such as automobile components and food packaging materials. Its versatility makes it one of the highest volume commodity resins manufactured worldwide. Most isotactic polypropylene is made by the polymerizing propylene with organo-metallic stereospecific catalysts (Ziegler-Natta). As used herein, the term "polyolefin" includes homopolymers and copolymers of both ethylene and propylene, as well as impact modified versions thereof.

The antistatic agent, which constitutes 5-20 wt% of the blend, is a copolymer of an epihalohydrin, preferably epichlorohydrin, and ethylene oxide. Epihalohydrin monomers have the formula: 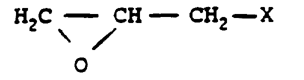 Wherein X is chlorine, bromine or iodine. Preferably X is chlorine, i.e. epichlorohydrin.

The epihalohydrin may be copolymerized with any of a variety of other known, copolymerizable monomers which have an oxirane group. Such monomers include glycidyl ethers, monoepoxides of dienes and polyenes, glycidyl esters and alkalene oxides. Examples of such monomers include vinyl glycidyl ether, isopropenyl glycidyl ether, butadiene monoxide, chloroprene monoxide, 3,4-epoxy-1-pentene, glycidyl acrylate, glycidyl methacrylate, 1,2-epoxy-3,3,trichloropropane, phenyl glycidyl ether, ethylene oxide, propylene oxide and trichlorobutylene oxide.

In the preferred embodiment, epichlorohydrin and ethylene oxide are copolymerized to form the antistatic additive. Materials of this type are made commercially by B.F. Goodrich under the trademarks HYDRIN and STATRITE.

### DETAILED DESCRIPTION OF THE INVENTION:

The invention can best be understood by referring to a specific example of the compositions generally described above. A blend was prepared 82.5 wt% polypropylene resin with 17.5 wt% of an antistatic copolymer (ASC) containing approximately 20% epichlorohydrin and 80% ethylene oxide. The two components were mixed using a single screw extruder at a melt temperature of about 218°C (425° F).

The melt mixed blend was then compression molded into plaques for testing the electrostatic dissipative properties as described in more detail below. Similarly, test plaques were also molded from the same polypropylene without the ASC for comparing the antistatic properties.

Plaques prepared in accordance with the foregoing example were tested for electrostative dissipative properties using Federal Test Standard 101B which is incorporated herein by reference. The results are set forth in Table I:

**Table I**

| Example | A (Control) | B (PP + ASC) |
|---|---|---|
| Surface Resistivity - Ohms | 3.87 x 10¹⁵ | 2.99 x 10¹³ |
| Volume Resistivity- Ohms/cm | 1.84 x 10¹⁵ | 7.11 x 10¹³ |
| Static Decay Rate Seconds | | |
| 1 Day R.H. <15% | | |
| 10% Cut Off | Run On | 0.06 |
| 0% Cut Off | Run On | 0.54 |
| Izod Impact R.T. (Ft-lb/in) J/m | (0.9) 48 | (2.7) 144 |
| Tensile Yield Stress, (psi) MPa | (4665) 32.19 | (3945) 27.22 |
| Modulus, (10⁵ psi) 10⁵ KPa | (2.7) 18.63 | (2.7) 18.63 |
| Elongation % | >190 | >190 |

The foregoing data clearly indicates superior electostatic dissipative properties when the epichlorohydrin/ethylene oxide copolymer is added to the polyolefin as well as unexpected impact strength improvement. The notation "Run On" shows that the static build-up did not diminish in any significant manner during the test.

While this invention has been described in connection with a certain specific embodiment, it will be obvious to those skilled in the art that other combinations may be used. Accordingly the scope of the invention should be determined solely by the appended claims.

## Claims

1. A polymer blend comprising a polyolefin polymer, and 5-20 weight % of the blend of an antistatic agent, said antistatic agent comprising a copolymer of epichlorohydrin and ethylene oxide in a weight ratio of from 15:85 to 40:60.

2. An antistatic polymer blend comprising : 93-80 weight % polypropylene and 7-20 weight % of an antistatic agent consisting essentially of a copolymer of 15-40 weight % epichlorohydrin and 85-60 weight % ethylene oxide.

## Patentansprüche

1. Polymermischung, enthaltend ein Polyolefinpolymer und 5 - 20 Gew.-% der Mischung eines antistatischen Mittels, wobei das antistatische Mittel ein Copolymer von Epichlorhydrin und Äthylenoxid in einem Gewichtsverhältnis von 15 : 85 bis 40 : 60 umfaßt.

2. Antistatische Polymermischung enthaltend: 93 - 80 Gew.-% Polypropylen und 7 - 20 Gew.-% eines antistatischen Mittels, bestehend im wesentlichen aus einem Copolymeren aus 15 - 40 Gew.-% Epichlorhydrin und 85 - 60 Gew.-% Äthylenoxid.

## Revendications

1. Mélange polymère comprenant un polymère polyoléfine et un agent antistatique représentant 5 à 20% en poids du mélange, ledit agent antistatique comprenant un copolymère d'épichlorhydrine et d'oxyde d'éthylène présents selon un rapport en poids de 15:85 à 40:60.

2. Mélange polymère antistatique comprenant 93 à 80% en poids de polypropylène et 7 à 20% en poids d'un agent antistatique constitué essentiellement d'un copolymère de 15 à 40% en poids d'épichlorhydrine et de 85 à 60% en poids d'oxyde d'éthylène.
